# EUROPÄISCHE PATENTSCHRIFT

(11) **EP 1 796 913 B1**
(45) Veröffentlichungstag und Bekanntmachung des Hinweises auf die Patenterteilung: **28.10.2009**
(21) Anmeldenummer: 05784993.7
(22) Anmeldetag: 15.09.2005
(51) Int. Cl.: B42D 15/00

(54) **SICHERHEITSDOKUMENT MIT ELEKTRISCH GESTEUERTEM ANZEIGENELEMENT**
SECURITY DOCUMENT WITH ELECTRICALLY-CONTROLLED DISPLAY ELEMENT
DOCUMENT DE SECURITE DOTE D'UN ELEMENT DE VISUALISATION A COMMANDE ELECTRIQUE

(30) Priorität: 17.09.2004 DE 102004045211
(43) Veröffentlichungstag der Anmeldung: 20.06.2007
(73) Patentinhaber: OVD Kinegram AG, 6301 Zug (CH)
(72) Erfinder: PETERS, John, Anthony, 8804 Au (CH); TOMPKIN, Wayne, Robert, 5400 Baden (CH); SCHILLING, Andreas, 6332 Hagendorn (CH)
(74) Vertreter: Zinsinger, Norbert
(86) Internationale Anmeldenummer: PCT/EP2005/009920
(87) Internationale Veröffentlichungsnummer: WO 2006/029857

(56) Entgegenhaltungen:
- EP-A- 1 431 062
- WO-A-03/057502
- US-A- 4 472 627
- US-B1- 6 175 441

## Beschreibung

Die Erfindung betrifft ein Sicherheitsdokument, insbesondere eine Banknote oder einen Ausweis, das einen Träger und einen auf dem Träger aufgebrachten mehrschichtigen flexiblen Folienkörper aufweist, der ein oder mehrere optische Sicherheitsmerkmale bereitstellt.

Im Hinblick auf die Möglichkeiten, die moderne Farbkopierer und andere Reproduktionssysteme bieten, besteht die Notwendigkeit, Sicherheitsdokumente mit Sicherheitsmerkmalen auszustatten, die einerseits eine Fälschung unter Verwendung derartiger Geräte erschweren und zum anderen für den Laien leicht und eindeutig erkennbar sind.

Zu diesem Zweck ist es bekannt, in Wertdokumente Sicherheitsfäden als Sicherheitselemente einzubringen, wobei die Anordnung so ist, dass der Faden bereichsweise oberflächlich freigelegt ist und so die in den Faden eingearbeiteten optischen Sicherheitsmerkmale, beispielsweise Hologramme oder partielle Demetallisierungen, für den Betrachter überprüfbar sind.

Weiter ist es aus EP 1 134 694 A1 bekannt, auf einem Blatt oder einem Streifen aus Papier eine elektronische Schaltung aus organischem Halbleitermaterial aufzudrucken, die über eine Leiterbahn mit einem Metallstreifen eines Geldscheins verbunden ist. Die elektronische Schaltung basiert hierbei nicht auf aus üblichen Halbleitermaterialien aufgebauten elektronischen Komponenten, sondern auf organischen Feldeffekttransistoren in Polymer-Halbleitertechnologie. Der Metallstreifen dient hierbei als Antenne, über die eine Kommunikation zwischen der Halbleiterschaltung mit einer entsprechenden Auswerteschaltung möglich ist. Damit kann die elektronische Schaltung zur Erkennung von Fälschungen dienen, weiter wird eine Ortung des Dokuments ermöglicht.

WO-03/057502 zeigt auch der Stand der Technik. Der Erfindung liegt nun die Aufgabe zugrunde, ein verbessertes Sicherheitsdokument anzugeben.

Diese Aufgabe wird von einem Sicherheitsdokument mit einem Träger und einem auf dem Träger aufgebrachten mehrschichtigen Folienkörper gelöst, bei dem der mehrschichtige Folienkörper ein elektrisch gesteuertes Anzeigenelement zur Generierung eines optischen Sicherheitsmerkmals mit zugeordneter elektrischer Stromquelle zum Betrieb des Anzeigenelements in Kombination mit einer optisch wirksamen diffraktiven Struktur aufweist. Diese Aufgabe wird weiter von einer Transferfolie zum Aufbringen eines mehrschichtigen flexiblen Folienkörper, der ein oder mehrere optische Sicherheitsmerkmale bereitstellt, auf einen Träger eines Sicherheitsdokument gelöst, wobei die Transferfolie eine Trägerfolie und eine den mehrschichtigen Folienkörper bildende Transferlage aufweist und der mehrschichtige Folienkörper ein elektrisch gesteuertes Anzeigenelement zur Generierung eines optischen Sicherheitsmerkmals mit zugeordneter elektrischer Stromquelle zum Betrieb des Anzeigenelements in Kombination mit einer optisch wirksamen diffraktiven Struktur aufweist.
Ein optisch variables Element, ein elektrisches gesteuertes Anzeigenelement sowie eine Stromquelle werden in einen vorzugsweise flexiblen, mehrschichtigen Folienkörper integriert und sodann auf den vorzugsweise aus einem Papiermaterial bestehenden Träger aufgebracht. Das optisch variable Element wird hierbei in den elektrisch-funktionellen Aufbau des mehrschichtigen Folienkörpers integriert, so dass sich diese Elemente wechselseitig sichern und damit eine Fälschung oder Nachahmung der von dem Folienkörper bereitgestellten optischen Sicherheitsmerkmale sicher verhindert wird. Eine Manipulation wird hierbei umso mehr verhindert, je mehr die von dem elektrisch gesteuerten Element generierten optischen Effekte und die von dem optisch variablen Element erzeugten optischen Effekte ineinander greifen.

Gemäß eines bevorzugten Ausführungsbeispiels der Erfindung überdecken sich das elektrisch gesteuerte Anzeigenelement und die diffraktive Struktur zumindest bereichsweise, so dass das optische Erscheinungsbild des durch die diffraktive Struktur erzeugten optischen Effekts durch das elektrisch gesteuerte Anzeigenelement zumindest teilweise beeinflusst ist. So kann beispielsweise das optische Erscheinungsbild des durch die diffraktive Struktur erzeugten optischen Effektes, beispielsweise eines Hologramms, durch das elektrisch gesteuerte Anzeigenelement beeinflußt werden. Hierbei ist es möglich, dass es sich bei dem elektrisch gesteuerten Anzeigenelement um eine Licht emittierendes Anzeigenelement handelt und die diffraktive Struktur das Abstrahlverhalten dieses Anzeigenelements verändert. Hierdurch lassen sich neuartige, markante und einprägsame optisch variable Effekte erzielen, die mit herkömmlichen Technologien nur schwer nachgeahmt werden können.

Weiter ist es möglich, dass das elektrisch gesteuerte Anzeigenelement weiter von einer sonstigen optisch wirksamen Mikrostruktur, beispielsweise einer Mattstruktur oder einer refraktiv wirkenden Mikrostruktur, beispielsweise einer Mikrolinsenstruktur, überlagert wird. Mikrostrukturen sind hierbei insbesondere Strukturen, deren laterale Abmessungen im 100µm-Bereich oder kleiner liegen.

Gemäß eines weiteren bevorzugten Ausführungsbeispiels der Erfindung wird vorgeschlagen, die diffraktive Struktur in zumindest bereichsweise Überdeckung mit der elektrischen Stromquelle anzuordnen. Durch die Überdeckung und/oder Integration der optisch wirksamen diffraktiven Struktur in die elektrische Stromquelle bilden diese wechselseitig eine integrale Einheit, können so nicht voneinander getrennt werden und bieten ein besonders hohes Maß an Sicherheit vor Manipulation.

Bei der elektrischen Stromquelle handelt es sich hierbei vorzugsweise um eine Solarzelle. Durch die Verwendung einer Solarzelle ist es möglich, augenfällige optische Sicherheitsmerkmale mittels des elektrisch gesteuerten Anzeigenelements ohne Zwischenschaltung weiterer aktiver elektronischer Bauelemente bereitzustellen. Damit lassen sich erfindungsgemäße Sicherheitsdokumente besonders kostengünstig fertigen.

Es ist jedoch auch möglich, anstelle einer Solarzelle beispielsweise eine gedruckte Batterie oder eine Antennenstruktur zur Einkopplung hochfrequenter elektromagnetischer Strahlung als Stromquelle zu verwenden. So können beispielsweise Informationen mittels eines Mobilfunkgeräts abgeprüft werden.

Vorzugsweise führt die (diffraktive) Mikrostruktur Licht aus einem die Solarzelle umgebenden Flächenbereich der Solarzelle zu oder erhöht den lokalen Wirkungsgrad der Solarzelle. Damit wird zum einen die der Solarzelle zugeführte Strahlungsenergie erhöht und das optische Erscheinungsbild der Solarzelle und der die Solarzelle umgebenden Bereichs mit einem optisch variablen, dekorativen Effekt überlagert. Die (diffraktive) Mikrostruktur kann hierbei über- und/oder unterhalb des aktiven Mediums der Solarzelle angeordnet sein, um den Wirkungsgrad der Solarzelle zu erhöhen. Falls eine Antireflektionsstruktur, beispielsweise eine Mottenaugenstruktur, über der Solarzelle angeordnet ist, so kann 4 % Fresnel-Reflektion eliminiert werden und so der Wirkungsgrad der Solarzelle erhöht werden. Wenn ein optisch wirksames Kreuzgitter, z.B. ein sinusförmiges Kreuzgitter mit 860 Linien/mm unterhalb der Solarzelle angeordnet wird, dann kann der Wirkungsgrad der Solarzelle durch die Einkoppelung eines Teiles des durch das aktive Medium der Solarzelle transmittierten Lichts in das aktive Medium der Solarzelle verbessert werden. Weiter ist es auf diese Art und Weise auch möglich, dass der Benutzer durch Abdeckung ein oder mehrere der zuführenden Bereiche den von dem elektrisch gesteuerten Anzeigenelement generierten optischen Effekt verändern kann. Weiter ist es hierdurch möglich, dass die Solarzelle in weiten Bereichen optisch überdeckt werden kann und damit vor dem Betrachter "verborgen" werden kann und der Solarzelle trotzdem noch ausreichende Mengen an Strahlungsenergie zugeführt werden. Vorzugsweise besitzt hierbei die diffraktive Struktur sowohl die Funktion, Strahlungsenergie auf die Solarzelle zu konzentrieren und gleichzeitig die Funktion, ein optisch variables Sicherheitselement für den Betrachter in dem Bereich der Solarzelle bereitzustellen.

Besondere Vorteile lassen sich weiter dadurch erzielen, dass die Solarzelle nicht in einer üblichen technischen/funktionellen Form, beispielsweise rechteckförmig, ausgeführt ist, sondern in Form eines Musters oder eines Bildes ausgeformt ist, das sich in das "Design" des Sicherheitselements einfügt. Die Solarzelle hat somit neben der rein elektrisch-funktionellen Funktion der Umwandlung von Strahlungsenergie in elektrische Energie weiter die Funktion eines optischen Sicherheitsmerkmals, das dem Betrachter beispielsweise eine spezielle Bildinformation zeigt. Weiter ist es möglich, dass die Solarzelle partiell musterförmig überdruckt ist und so als Hintergrundbereich eines optischen Sicherheitsmerkmals des Sicherheitsdokuments dient.

Gemäß eines weiteren bevorzugten Ausführungsbeispiels der Erfindung ist die diffraktive Struktur benachbart zum elektrisch gesteuerten Anzeigenelement angeordnet, so dass die von dem elektrischen Anzeigenelement generierten optischen Effekte und die von der diffraktiven Struktur generierten optischen Effekte sich ergänzende Informationen bereitstellen. Dem Betrachter wird so jegliche Veränderung oder Manipulation des einen oder des anderen Elements sofort augenscheinlich, wodurch die Fälschungssicherheit weiter verbessert wird.

Das Anzeigenelement weist beispielsweise eine organische Leuchtdiode auf, die in Form eines Musters oder einer Zahl ausgeformt ist. Das Anzeigenelement stellt so eine Licht einer bestimmten Wellenlänge in Form eines Musters oder einer Zahl emittierende Struktur bereit. Weiter ist es möglich, dass das Anzeigenelement ein elektrochromes Element aufweist, das in Form eines Musters oder einer Zahl ausgeformt ist. Das Anzeigenelement stellt so eine Struktur bereit, die abhängig von der anliegenden elektrischen Spannung ein Muster oder eine Zahl in unterschiedlichen Farben zeigt. Weiter ist es möglich, dass das Anzeigenelement eine Vielzahl von unterschiedlich gefärbten und unterschiedlich geladenen Teilchen aufweist, die beweglich zwischen zwei Elektrodenschichten angeordnet sind. Durch Anlegung einer Spannung zwischen den Elektrodenschichten lässt sich die Konzentration der ein oder der anderen Teilchen in der Nähe der einen oder der anderen Elektrodenschicht verändern, so dass sich der optische Eindruck des Anzeigenelements abhängig von der anliegenden Spannung bzw. abhängig vom Umpolen der Spannung ändert.

Weiter ist es möglich, daß das Anzeigenelement individualisiert wird. So kann das Anzeigenelement beispielsweise in Form einer Serien-Nummer, eines Bildes oder eines Namens individualisiert werden, beispielsweise mittels eines entsprechend ausgeformten Überdrucks, durch Laserablation oder durch lokalen Transfer von Schichten mittels einer Transferfolie.

Besondere Vorteile lassen sich dadurch erzielen, dass das Sicherheitsdokument ein transparentes Fenster aufweist und das Anzeigenelement in diesem transparenten Fenster angeordnet ist. Jedoch ist es möglich, dass das Anzeigenelement und die das Anzeigenelement überlagernde diffraktive Struktur sowohl von der Vorderseite als auch von der Rückseite des Sicherheitsdokuments sichtbar sind und im weiteren auch lediglich bei der Durchlichtbetrachtung erkennbare Sicherheitsmerkmale aufweisen können. Besonders vorteilhaft ist es hier, ein elektrisch gesteuertes Anzeigenelement einzusetzen, dessen Betrachtungseindruck sich bezüglich Vorder- und Rückseite unterscheidet.

Gemäß eines weiteren bevorzugten Ausführungsbeispiels der Erfindung weist der flexible mehrschichtige Folienkörper weiter einen aus organischen Halbleiterbauelementen aufgebauten elektronischen Schaltkreis auf, der das Anzeigenelement steuert. Der elektronische Schaltkreis weist beispielsweise einen Schwingkreis auf, der ein Blinken des Anzeigenelements oder weitere Effekte, wie beispielsweise einen "Lauflicht"-Effekt, steuert. Bevorzugt wird der elektronische Schaltkreis hierbei zumindest bereichsweise von einer optische aktiven diffraktiven Struktur überlagert, die ein optisches Sicherheitsmerkmal bereitstellt. Hierdurch ergeben sich die bereits oben angedeuteten Vorteile.

Der elektronische Schaltkreis kann hierbei durch die Verwendung von geeigneten Materialien für den Betrachter sichtbar oder unsichtbar ausgestaltet werden. Weiter können beispielsweise metallische Elektrodenschichten im gleichen Prozessgang wie optisch wirksame metallisch reflektierende Schichten generiert werden.

Der Schichtaufbau des flexiblen mehrschichtigen Folienkörpers zeichnet sich durch eine Replizierlackschicht mit einer abgeformten, beugungsoptischen aktiven Reliefstruktur zur Erzeugung eines beugungsoptischen Sicherheitsmerkmals und zwei oder mehr elektrischen Funktionsschichten eines elektrisch gesteuerten Anzeigenelements aus. Vorzugsweise weist der mehrschichtige Folienkörper hierbei mindestens eine elektrische Funktionsschicht aus einem organischen Halbleitermaterial auf. Der mehrschichtige Folienkörper besteht bevorzugt aus der Transferlage einer Transferfolie, beispielsweise einer Heißprägefolie, die auf den bevorzugt aus einem Papiermaterial bestehenden Träger des Sicherheitsdokuments appliziert ist.

Eine weitere Erhöhung der Fälschungssicherheit wird dadurch erzielt, dass der flexible mehrschichtige Folienkörper, der das elektrisch gesteuerte Anzeigenelement enthält, und ein benachbarter Bereich des Sicherheitsdokuments nach Applizierung mit einem gemeinsamen, weitgehend opaken musterfömig gestalteten Überdruck versehen sind und damit die Grenzen des applizierten mehrschichtigen Folienkörpers für den Betrachter optisch aufgelöst werden.

Weiter weist der flexible mehrschichtige Folienkörper neben beugungsoptisch wirkenden optischen variablen Elementen auch weitere, andersartige optische Effekte generierende optisch variable Elemente auf. Beispielsweise weist der Folienkörper ein Dünnfilmschichtsystem zur Erzeugung von blickwinkelabhängigen Farbveränderungen, eine ausgerichtete und vernetzte Flüssigkristallschicht zur Erzeugung von Polarisations-Effekten oder cholesterische Flüssigkristallschichten zur Erzeugung von blickwinkelabhängigen Farbverschiebungseffekten auf. Auch derartige optisch variable Elemente werden bevorzugt mit den elektrischen Komponenten des mehrschichtigen Folienkörpers überlagert oder in diesen integriert.

Im folgenden wird die Erfindung anhand von mehreren Ausführungsbeispielen unter Zuhilfenahme der beiliegenden Zeichnungen beispielhaft erläutert.
- Fig. 1: zeigt eine schematische Darstellung eines erfindungsgemäßen Sicherheitsdokuments.
- Fig. 2: zeigt eine vereinfachte, nicht maßstabsgetreue Schnittdarstellung des Sicherheitsdokuments nach Fig. 1.
- Fig. 3: zeigt eine Darstellung eines mehrschichtigen flexiblen Folienkörpers für das Sicherheitsdokument nach Fig. 1.
- Fig. 4a: zeigt eine Schnittdarstellung des Folienkörpers nach Fig. 3.
- Fig. 4b bis Fig. 5c: zeigen schematische, nicht maßstabsgetreue Darstellungen von Ausgestaltungsvarianten des Folienkörpers nach Fig. 3.
- Fig. 6a und Fig. 6b: zeigen Darstellungen des Sicherheitsdokuments nach Fig. 1 bei verschiedenen Beleuchtungssituationen.
- Fig. 7a und Fig. 7b: zeigen Darstellungen eines weitren erfindungsgemäßen Sicherheitsdokuments bei verschiedenen Beleuchtungssituationen.
- Fig. 8a: zeigt einen Ausschnitt der Vorderseite eines weiteren erfindungsgemäßen Sicherheitsdokuments gemäß eines weiteren Ausführungsbeispiels der Erfindung.
- Fig. 8b: zeigt einen Ausschnitt der Rückseite des erfindungsgemäßen Sicherheitsdokuments nach Fig. 8a.

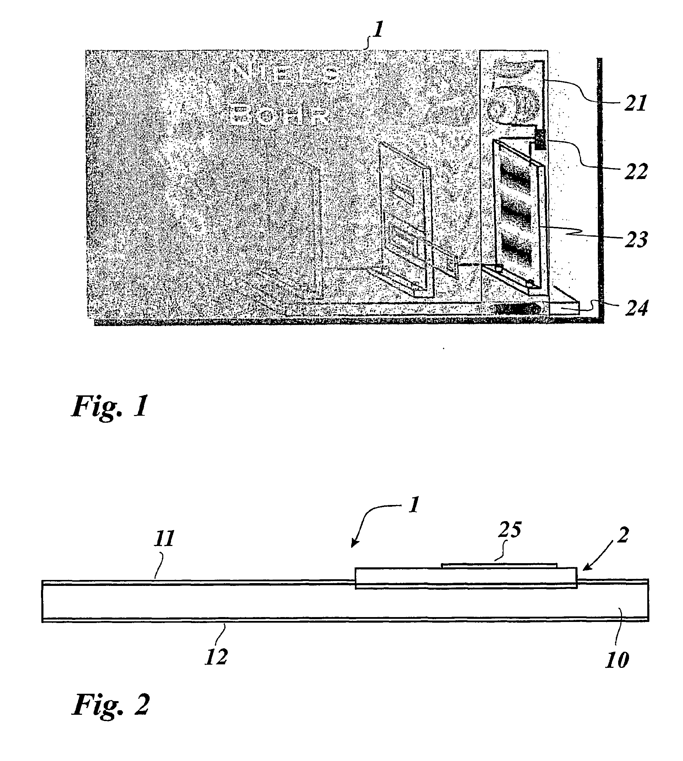

Fig. 1 und Fig. 2 zeigen ein Sicherheitsdokument 1 in Form einer Banknote. Das Sicherheitsdokument 1 besteht aus einem Träger 10 aus einem Papiermaterial, der in etwa eine Dicke von 100 µm besitzt. Der Träger 10 ist beidseitig mit farbigen Aufdrucken 11 und 12, beispielsweise mittels Offset-Druck, bedruckt. Auf eine derartige Bedruckung könnte auch verzichtet werden oder der Träger 10 könnte erst nach Applikation des Folienkörpers 2 mit den Aufdrucken 11 und 12 bedruckt werden. Dieser Aufdruck ist beispielhaft in Fig. 1 dargestellt, wobei die Zahlen "1" und "2" hier in grüner Farbe ausgeführt sind. Auf den bedruckten Träger 10 ist weiter durch ein Transferverfahren ein flexibler Folienkörper 2 appliziert. Weiter ist es möglich, dass vor Applizierung des Folienkörpers 2 der Träger 10 in dem Bereich, auf den der Folienkörper 2 zu applizieren ist, mit einer Lackschicht oder einer Primer-Schicht versehen wird. Beispielsweise wird der Folienkörper 2 mittels eines Heißprägeverfahrens auf den in Fig. 1 angedeuteten Bereich des Sicherheitsdokuments 1 aufgebracht. Der Folienkörper 2 wird anschließend bereichsweise mit einem Aufdruck 25, beispielsweise mittels Intaglio-Druck, überdruckt.

Es ist weiter möglich, dass das Sicherheitsdokument 1 ein Identifikations-Dokument oder ein Paß ist. In diesem Fall besteht der Träger 10 beispielsweise aus einer mechanisch stabilen Kunststofffolie einem oder Kunststofflaminat, beispielsweise aus Polycarbonat. Weiter können bei derartigen Anwendungsfällen auf den Folienkörper 2 und optional über den Aufdruck 25 noch ein oder mehrere weitere Kunststoffschichten aufgebracht sein, die beispielsweise als Schutzschicht wirken. So kann der Folienkörper 2 bei derartigen Anwendungsfällen beidseitig von weiteren Folienschichten umgeben sein, die als Schutzschichten wirken und die Lebensdauer erhöhen. Beispielsweise kann in einem derartigen Anwendungsbeispiel der Folienkörper 2 zwischen zwei Polycarbonat-Trägerschichten laminiert sein.

Der flexible Folienkörper 2 weist ein Anzeigenelement 21, eine mit dem Anzeigenelement elektrisch verbundene elektronische Schaltung 22, eine Solarzelle 23 und ein optisch variables Element 24 auf.

Bei dem optisch variablen Element 24 handelt es sich um ein diffraktives Sicherheitselement, beispielsweise um ein Hologramm oder Kinegram^{®}. Es ist jedoch auch möglich, dass das optisch variable Element 24 von einem in den Folienkörper 2 integrierten Dünnfilmschichtsystem oder vernetzten und orientierten Schicht aus seinem (cholesterischen) Flüssigkristallmaterial besteht. Weiter ist es auch möglich, dass in den Folienkörper 2 noch weitere optisch variable Elemente integriert sind, die bevorzugt im Bereich der Solarzelle 23, der elektronischen Schaltung 22 und des Anzeigenelements 21 in den Folienkörper 2 integriert sind.

Weiter ist es möglich, dass das Sicherheitsdokument 1 noch über weitere optische Sicherheitsmerkmale verfügt. So ist es beispielsweise möglich, dass in den Träger 10 ein Sicherheitsfaden oder Wasserzeichen eingebracht sind oder dass der Aufdruck 11 der Aufdruck 12 oder der Folienkörper 2 mit einem Aufdruck aus einem Effektpigment, beispielsweise einem Flüssigkristallpigment oder einem Interferenzschichtpigment versehen ist.

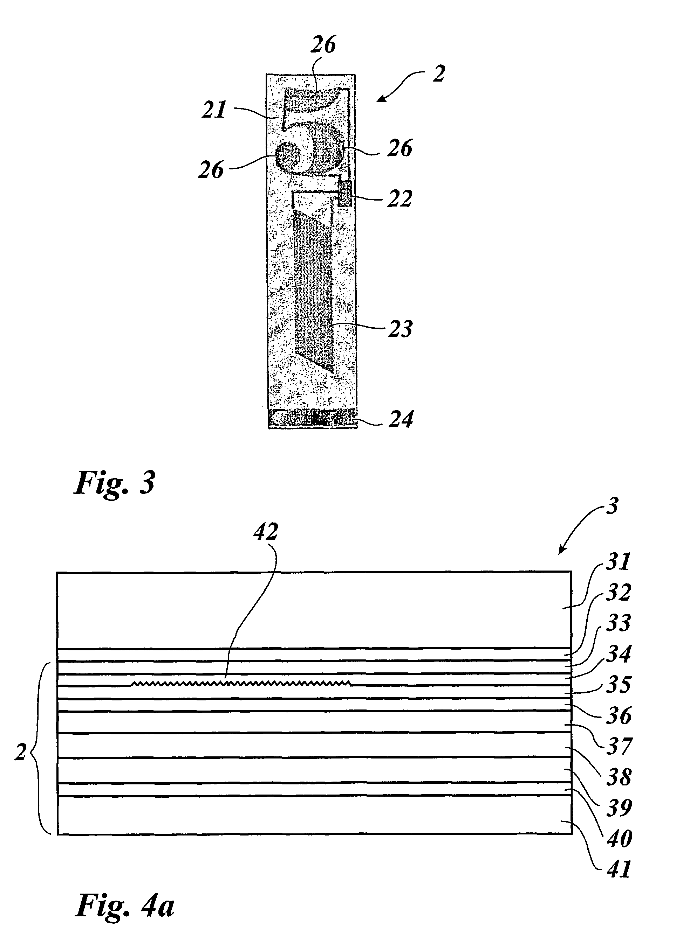

Der detaillierte Aufbau des Folienkörpers wird nun anhand der Figuren Fig. 3 bis Fig. 5c detailliert erläutert.

Fig. 3 zeigt eine Draufsicht auf den flexiblen mehrschichtigen Folienkörper 2 mit dem in Form der Zahl 5 ausgeformten Anzeigenelement 21, der elektronischen Schaltung 22, der Solarzelle 23 und dem optisch variablen Element 24. Wie in Fig. 3 gezeigt, ist der Folienkörper im Bereich des Anzeigenelements 21, der Solarzelle 23, der elektronischen Schaltung 22, der von der elektronischen Schaltung 22 zu dem Anzeigenelement 21 und zu der Solarzelle 23 führenden elektrischen Verbindungen sowie im Bereich des optisch variablen Elements 24 opak und in dem übrigen Bereich transparent, so dass in dem übrigen Bereich die grafische Gestaltung des Aufdrucks 11 für den Betrachter sichtbar bleibt. Der Aufdruck 25 ist im Bereich der Solarzelle 23 auf den Folienkörper 2 aufgedruckt, so dass das optische Erscheinungsbild der Solarzelle 23 wie in Fig. 1 gezeigt durch den Aufdruck 25 verändert wird. Auf den Aufdruck 25 kann auch verzichtet werden.

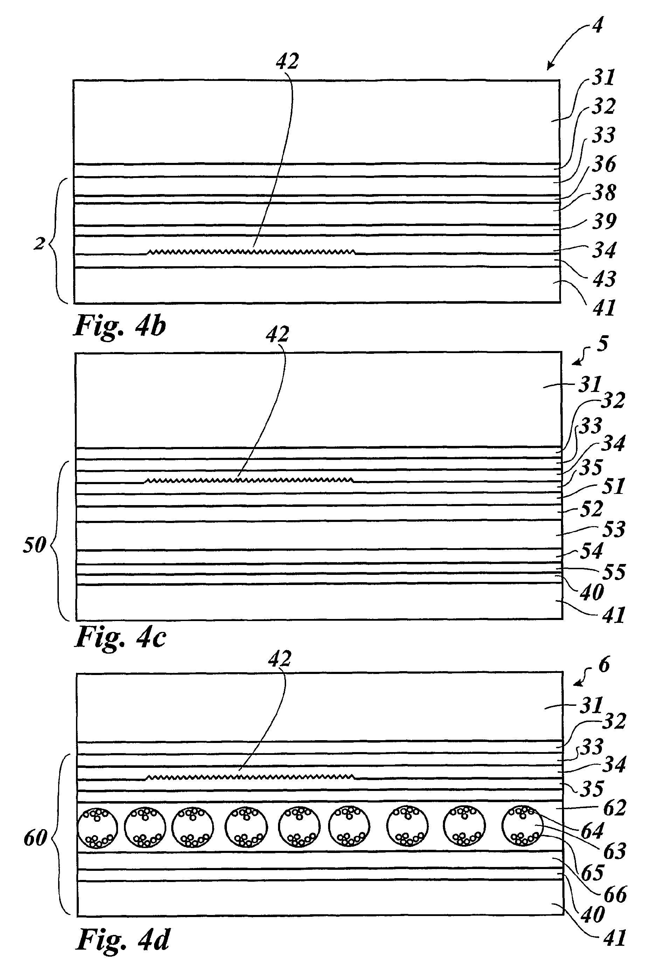

Der Folienkörper 2 bildet die Übertragungslage einer in Fig. 4 ausschnittsweise gezeigten Transferfolie 3, die aus einer Trägerfolie 31, einer Ablöseschicht 32 und dem Folienkörper 2 besteht.

Die Trägerfolie 31 besteht aus einer PET Folie einer Stärke von 10 µm bis 100 µm, die vorzugsweise mono-axial oder bi-axial gereckt ist, um eine Verzerrung der Trägerfolie im weiteren Herstellungsprozess möglichst gering zu halten. Auf die Trägerfolie 31 wird sodann die Ablöseschicht 32 aufgebracht, die vorzugsweise aus einem wachsartigen Material besteht. Sodann wird eine Lackschicht 33 einer Dicke von 0,5 µm bis 5 µm, vorzugsweise von 1 µm bis 2 µm, mittels eines Druckverfahrens aufgebracht. Bei der Lackschicht 33 handelt es sich hierbei um eine transparente Schutzlackschicht. Auf die Schicht 33 wird sodann eine Replizierlackschicht 34 aufgebracht. Die Replizierlackschicht 34 besteht aus einem thermoplastischen oder vernetzten Polymer, in das mittels eines Replizierwerkzeuges unter Einwirkung von Hitze und Druck in dem Bereich 26 sowie im Bereich des optisch variablen Elements 24 eine diffraktive Struktur 24 repliziert wird. Hierzu wird beispielsweise ein thermoplastischer Replizierlack mittels einer Tiefdruckrasterwalze vollflächig auf die Schutzlackschicht 33 aufgebracht, getrocknet und sodann die diffraktive Struktur 42 in den oben bezeichneten Bereich mittels einer Prägematrize eingeprägt.

Weiter ist es auch möglich, dass als Replizierlack ein strahlenvernetzbarer Lack auf die Schutzlackschicht 33 aufgebracht wird und die diffraktive Struktur 42 sodann mittels UV-Replikation in die Replizierlackschicht abgeformt wird.

Im Bereich des elektrisch gesteuerten Anzeigenelements 21 wird sodann eine optische Trennschicht 35 auf die Replizierlackschicht 34 aufgebracht. Bei der optischen Trennschicht 35 kann es sich hierbei um eine Lackschicht mit einem in Bezug auf der Replizierlackschicht 34 deutlich unterschiedlichen Brechungsindex handelt. Bevorzugt handelt es sich bei der optischen Trennschicht 35 jedoch um eine HRI- oder LRI-Schicht (HRI = High Refraction Index; LRI = Low Refraction Index) aus einem geeigneten Dielektrikum, zum Beispiel liO₂ oder ZnS (für HRI) oder MgF₂ (für LRI).

Sodann wird die Elektrodenschicht 36 auf den Folienkörper aufgebracht und strukturiert. Die Elektrodenschicht 36 ist hierbei im Bereich des Anzeigenelements 21 in Form der in Fig. 3 dargestellten Ziffer "5" strukturiert und besteht dort aus einem transparenten, elektrisch leitfähigen Material, beispielsweise aus Indium-Zinn-Oxid oder einem elektrisch leitfähigen Polymer, vorzugsweise Polyanilin oder Polypyrrol. Es ist jedoch auch möglich, die Elektrodenschicht 36 aus einer sehr dünnen und damit zumindest teiltransparenten Metallschicht, beispielsweise aus Gold oder Silber herzustellen.

Die Elektrodenschicht 36 wird hierbei bereits strukturiert auf die optische Trennschicht 35 mittels eines Druckverfahrens aufgebracht, beispielsweise falls die Elektrodenschicht 36 aus einem elektrisch leitfähigen Polymer besteht. Weiter ist es möglich, dass die Elektrodenschicht 36 vollflächig auf den darunter liegenden Folienkörper aufgebracht wird und sodann mittels Positiv/Negativätzen oder Laserablation bereichsweise wieder entfernt wird, so dass die Elektrodenschicht 36 im Bereich des Anzeigenelements 21 die in Fig. 3 gezeigte Form erhält. Vorzugsweise erbringt die strukturierte Elektrodenschicht 36 hierbei nicht nur die Funktion einer Elektrode für das Anzeigenelement 21, sondern besitzt die notwendige Strukturierung, um gleichzeitig eine Elektrodenschicht der elektronischen Schaltung 22 und des Solarzelle 23 zu bilden sowie die elektrischen Verbindungsbahnen zwischen den entsprechenden Elektrodenschichten des Anzeigenelements 21, der elektronischen Schaltung 22 und der Solarzelle 23 herzustellen.

Die optische Trennschicht 35 im Bereich des Anzeigenelements 21 kann hierbei auch entfallen, wenn der Brechungsindex zwischen dem Elektrodenmaterial und dem Replizierlack entsprechend hoch ist oder eine dünne teiltransparente Metallschicht als Elektrodenschicht verwendet wird.

Sodann werden im Bereich des Anzeigenelements 21 die Schichten 37 und 38 auf der Elektrodenschicht 36 aufgebracht. Sodann wird die Elektrodenschicht 39 aufgebracht, die, wie in Bezug auf die Elektrodenschicht 36 beschrieben, im Bereich des Anzeigenelements 21 in Form der darzustellenden Information, das heißt in Form der in Fig. 3 dargestellten Ziffer "5" strukturiert ist. Die Elektrodenschicht 39 besteht hierbei aus einer dünnen, reflektiven Metallschicht, beispielsweise aus Kupfer, Silber, Aluminium oder Gold. Die beiden Elektrodenschichten 36 und 39 sowie die beiden Halbleiterschichten 37 und 38 bilden eine organische Leuchtdiode (OLED = Organic Light Emmitting Diode), wobei die Elektrodenschicht 36 die Anode und die Elektrodenschicht 39 die Kathode der Leuchtdiode bilden. Die Halbleiterschichten 38 und 39 werden hierbei bevorzugt mittels eines Druckverfahrens aufgebracht. Weiter ist es auch möglich, lediglich eine Schicht aus einem elektroluminiszierenden Polymer, beispielsweise PPV oder POLY(9,9'-dioctylfluorene) in einer Dicke von ca. 150 nm zwischen der Anode und der Kathode aufgebracht. Nähere Angaben zum Aufbau von organischen Leuchtdioden sowie zu den für diese verwendbaren Materialien sind beispielsweise WO 90/13148 zu entnehmen.

Parallel zum Aufbringen der Schichten 38 bis 40 im Bereich des Anzeigenelements 21 erfolgt im Bereich der elektronischen Schaltung 22 und der Solarzelle 23 das Aufbringen weiterer elektrisch-funktioneller Schichten, die die entsprechende Funktion der Solarzelle 23 und der elektronischen Schaltung 22 realisieren.

Die Solarzelle 23 ist hierbei vorzugsweise als organische Solarschichtzelle realisiert. Eine derartige Solarzelle besteht im einfachsten Fall aus einer Schicht aus einem konjungierten Polymer, beispielsweise PPV-Poly(para-phenylen-vinylene), das zwischen einer transparenten Elektrodenschicht, beispielsweise der Elektrodenschicht 36, und einer metallischen Elektrodenschicht, beispielsweise der Elektrodenschicht 39 angeordnet ist. Die Dicke der organischen Halbleiterschicht beträgt hierbei üblicherweise zwischen 10 und einigen 100 nm. Weiter ist es möglich, im Bereich der Solarzelle 23 ein oder mehrere Schichten zwischen den Elektroden anzuordnen, die aus Donatoren-Molekülen und Akzeptoren-Molekülen bestehen. Diese Donatoren und Akzeptoren sind auf das Licht-Spektrum der Sonne abgestimmt, wodurch die Effektivität der Solarzelle erhöht werden kann. Als Donatoren und Akzeptoren finden Polymere, Pigmente und Tinten Verwendung, die so das Energie-Absorptionsspektrum der Solarzelle gegenüber der oben beschriebenen einschichtigen Anordnung aus einem halbleitenden Polymer verbessern. Eine derartige Solarzelle besteht beispielsweise aus einer einzelnen Pigmentschicht, einer Schicht aus einem Donator und einer Schicht aus einem Akzeptor (Pigment/Pigment oder Polymer/Polymer) oder aus einem Gemisch aus Donatoren und Akzeptoren (Pigment/Pigment; Polymer/Polymer oder Polymer/Tinte).

Weiter ist es auch möglich, anstelle der oben beschriebenen organischen Solarzellen, die sich aufgrund der hierfür verwendeten Materialien besonders gut in den Folienkörper 2 integrieren lassen, Dünnfilmsilizium-Solarzellen oder DSSC-Solarzelle (DSSC = Dye Sensitized Solar Cells) zu verwenden.

Im Bereich der elektronischen Schaltung 22 werden auf die strukturierte Elektrodenschicht 36 mehrere weitere strukturierte Schichten, bestehend aus organischen lsolationsmaterialien, beispielsweise Polyvinylphenol, organischen Halbleitern, beispielsweise Polythiophen und/oder metallische oder organische Elektroden-Materialien, wie beispielsweise Polyanilin, Polypyrrol oder dotierte Polyethylen, vorzugsweise in einer Dicke von 0,5 µm bis 1 µm aufgebracht. Diese Materialien können hierbei in flüssiger Form, in gelöster Form oder als Suspension aufgebracht und sodann durch Trocknen oder in sonstiger Weise verfestigt werden. Durch die Strukturierung dieser Schichten werden im Bereich der elektronischen Schaltung 22 ein oder mehrere elektronische Bauelemente, beispielsweise organische Feldeffekttransistoren, Widerstände und Kapazitäten gebildet, die die gewünschte Funktionsweise, beispielsweise die Funktionsweise eines Oszillators, erbringen.

Im Bereich des optisch variablen Elements 24 wird auf die in diesem Bereich in die Schicht 34 replizierte diffraktive Reliefstruktur eine Reflexionsschicht aufgebracht. Bei der Reflexionsschicht handelt es sich vorzugsweise um eine dünne Metallschicht, beispielsweise um die Elektrodenschicht 39. Es ist jedoch auch möglich, im Bereich des optisch variablen Elements 24 ebenfalls die optische Trennschicht 35 aufzubringen und damit ein semi-transparentes, optisch variables Element 24 bereitzustellen.

Im folgenden wird auf den sich so ergebenden aus mehreren unterschiedlichen strukturierten Schichten aufgebauten Folienkörper eine Schutzlackschicht 40 und eine Klebeschicht 41 aufgebracht. Bei der Klebeschicht 41 handelt es sich vorzugsweise um eine Schicht aus einem thermisch aktivierbaren oder strahlenvernetzbaren Kleber.

Es ist weiter möglich, die Replizierlackschicht 34 mit der diffraktiven Struktur nicht oberhalb, sondern unterhalb der elektrischen Funktionsschicht des Anzeigenelements 21 anzuordnen. Dies wird nun anhand von Fig. 4b verdeutlicht.

Fig. 4b zeigt eine Transferfolie 4 mit der Trägerfolie 31, der Ablöseschicht 32, der Schutzlackschicht 33, der transparenten Elektrodenschicht 36, der elektroluminiszenten Polymerschicht 38 und der Elektrodenschicht 39. Die elektrolumineszierende Polymerschicht kann hierbei auch von einem Schichtsystem mit zwei oder mehr Schichten oder aus einem Gemisch mehrerer Materialien bestehen. Bei der Elektrodenschicht 39 handelt es sich hier nicht um eine strukturierte reflektive Metallschicht, sondern um eine Schicht aus einem transparenten leitfähigen Material, beispielsweise aus Indium-Zinn-Oxid oder aus einer gitterförmigen und damit transparent erscheinenden Metallschicht. Auf die transparente Elektrodenschicht 39 ist sodann die Replizierlackschicht 34 aufgebracht, in die die diffraktive Struktur 42 abgeformt ist. Auf die Schicht 34 ist sodann eine reflektive Schicht 43, vorzugsweise eine reflektive Metallschicht oder eine die Reflexion erhöhende Schicht, beispielsweise die Schicht 35 nach Fig. 4, aufgebracht. Auf diese Weise ist es möglich, dass das Anzeigenelement 21, sofern es in einem in dem Träger 10 ausgeformten transparenten Fenster angeordnet wird, sowohl in Richtung der Vorderseite als auch in Richtung der Rückseite des Sicherheitsdokuments Licht emittieren kann.

Anschließend wird die Klebeschicht 41 nach Fig. 4a aufgebracht.

Auch nach dem Ausführungsbeispiel nach Fig. 4b ist in der Replizierlackschicht 34 sowohl die in dem Bereich 26 des Anzeigenelements 21 vorgesehene diffraktive Struktur als auch die in dem Bereich des optisch variablen Elements 24 vorgesehene diffraktive Struktur abgeformt, so dass die Replizierlackschicht 34 vorzugsweise vollflächig die darüber liegenden elektrischen Funktionsschichten des Anzeigenelements 21, der elektronischen Schaltung 22 und der Solarzelle 23 bedeckt und vor Manipulationen schützt.

Bei der in dem Bereich 26 des Anzeigenelements abgeformten diffraktiven Struktur handelt es sich vorzugsweise um eine ein Diffraktionsmuster, beispielsweise ein Hologramm oder ein Kinegramm generierende Struktur. Wird der das Anzeigenelement 21 bildenden organischen Leuchtdiode Energie zugeführt, so leuchtet das Hologramm/Kinegram® in der durch die Zusammensetzung der elektroluminiszenten Polymere der Schicht 38 bzw. der Schichten 38 und 39 bestimmten Farbe auf. Bei dem Ausführungsbeispiel nach Fig. 4a ist es hierbei möglich, durch Einstellung eines geringen Brechungsindexunterschieds zwischen den Schichten 34 und 35 zu erreichen, dass das Hologramm/Kinegram® erst sichtbar wird, wenn Energie der das Anzeigenelement 21 bildenden organischen Leuchtdiode zugeführt wird.

Weiter ist es auch möglich, in dem Bereich 26 des Anzeigenelements 21 eine beugungsoptisch wirkende Struktur abzuformen, die das Abstrahlverhalten des von der organischen Leuchtdiode emittierten Lichtes gezielt beeinflusst. So ist es möglich, in dem Bereich 26 ein Blaze-Gitter vorzusehen, welches das von der organischen Leuchtdiode abgestrahlte Licht in eine bestimmte Richtung lenkt. So ist es möglich, dass das Anzeigenelement sehr hell erscheint, wenn es aus der normalen Betrachtungsrichtung betrachtet wird und nur schwach leuchtet, wenn das Sicherheitsdokument um 180° gedreht wird. Refraktive sowie diffrative Elemente können hierbei im Bereich 26 des Anzeigenelements 21 miteinander kombiniert werden, um das gewünschte Abstrahlverhalten zu erzielen.

Weiter ist es auch möglich, die Ausführungsbeispiele nach den Figuren Fig. 4a und Fig. 4b miteinender zu kombinieren und in dem Folienkörper 2 sowohl eine Replizierlackschicht mit einer abgeformten diffraktiven Struktur überhalb der elektrischen Funktionsschichten als auch eine solche Replizierlackschicht mit abgeformter diffraktiver Struktur unterhalb der elektrischen Funktionsschicht vorzusehen. Dadurch wird der Schutz gegenüber Manipulationen weiter erhöht. Weiter ergibt sich hierdurch auch die Möglichkeit, interessante Effekte, vor allem bei Durchlichtbetrachtung, zu erzeugen. So ist es möglich, dass das Anzeigenelement bei Anordnung im Bereich eines transparenten Fensters des Trägers 10 in Richtung der Vorderseite und der Rückseite des Sicherheitsdokuments 1 durch die verschiedene Gestaltung der jeweiligen dem Betrachter zugewandten diffraktiven Strukturen unterschiedliche optische Erscheinungsbilder zeigt.

Weiter ist es auch möglich, in dem Folienkörper 2 im Bereich eines solchen transparenten Fensters des Trägers 10 zwei übereinander angeordnete organische Leuchtdioden vorzusehen, von denen die eine in Richtung der Vorderseite und die andere in Richtung der Rückseite des Sicherheitsdokuments Licht emittiert. Damit kann elektrisch gesteuert ein unterschiedlicher Betrachtungseindruck in Richtung der Vorderseite und in Richtung der Rückseite des Sicherheitsdokuments erzielt werden.

Weiter ist es auch möglich, im Bereich des Anzeigenelements 26 zwei oder mehr nebeneinander angeordnete und getrennt ansteuerbare organische Leuchtdioden anzuordnen, um so weitere optische Effekte zu generieren. So ist es beispielsweise möglich, getrennt angesteuerte organische Leuchtdioden in Form einer Flagge oder der Zahl "100" anzuordnen, so daß die Flagge und die Zahl "100" Licht in drei unterschiedlichen Farben emittieren.

Neben der Verwendung einer organischen Leuchtdiode als Anzeigenelement 21 ist es auch möglich, eine elektrochromes Element als Anzeigenelement vorzusehen. Ein solches elektrochromes Element wechselt seine Farbe, sobald eine Spannung angelegt wird. Der Aufbau des Anzeigenelements 21 und der Verwendung eines elektrochromen Elements wird im folgenden beispielhaft anhand von Fig. 4c verdeutlicht.

Fig. 4c zeigt eine Transferfolie 5, die aus der Trägerfolie 31, der Ablöseschicht 32 und der Transferlage 50 besteht. Die Transferlage 50 weist die Schutzlackschicht 33, die Replizierlackschicht 34 mit der in sie abgeformten diffraktiven Struktur 42, die optische Trennschicht 35, die Schutzschicht 40 (optional) und die Klebeschicht 41 nach Fig. 4a auf. Zwischen der optischen Trennschicht 35 und der Schutzlackschicht 40 sind im Bereich des Anzeigenelements 21 Schichten 51 bis 55 in der in Fig. 3 gezeigten Form strukturiert übereinander aufgebracht, die ein elektrochromes Element bilden. Bei den Schichten 51 und 55 handelt es sich um transparente, elektrisch leitfähige Elektrodenschichten, für die beispielsweise die in Bezug auf die Elektrodenschicht 36 nach Fig. 4a beschriebenen Materialien verwendet werden. Die zentrale Schicht 53 besteht aus einem polymeren Elektrolyt oder wässrigen Metalloxid. Die an der Schicht 53 angrenzenden Schichten 52 und 54 bestehen aus einer elektrochromen Schicht bzw. aus einer Ionen speichernden Schicht. Als elektrochromes Polymer kann beispielsweise Poly(3,4-Ethylenedioxidthiophene), PEDOT mit Poly(styrenesulfonat) PSS verwendet werden, durch welches einen Farbwechsel von einem transparenten Zustand in einen dunkelblauen Zustand realisiert werden kann. Als Ionen speichernde Schicht kann beispielsweise eine nanokristalline Titaniumoxidschicht verwendet werden.

Weiter ist es möglich, als Anzeigenelement 21 einen Schichtaufbau zu wählen, bei dem unterschiedlich gefärbte und unterschiedlich geladene Teilchen beweglich zwischen zwei Elektrodenschichten angeordnet sind, wodurch die Konzentration der einen oder der anderen Teilchen in Richtung der einen Elektrode bzw. in Richtung der anderen Elektrode durch Anlegen einer Spannung an das Elektrodenpaar verändert werden kann. Ein Ausführungsbeispiel für die Verwendung eines derartigen Anzeigenelements für das Anzeigenelement 21 ist in Fig. 4d gezeigt:

Fig. 4d zeigt eine Transferfolie 6 mit der Trägerfolie 31, der Ablöseschicht 32 und der Transferlage 60. Die Transferlage 60 weist die Schutzlackschicht 33, die Replizierlackschicht 34 mit der abgeformten diffraktiven Struktur 42, die optische Trennschicht 35, die Schutzlackschicht 40 und die Klebeschicht 41 nach Fig. 4a auf. Zwischen den Schichten 35 und 40 sind im Bereich des Anzeigenelements 21 in der in Fig. 3 gezeigten Form strukturierte Elektrodenschichten 61 und 66 sowie eine dazwischen liegende Schicht 62 mit Mikrokapseln 63 vorgesehen, die jeweils schwarz gefärbte, positiv geladene Teilchen 64 und weiß gefärbte, negativ geladene Teilchen 65 enthalten. Die Elektrodenschichten 61 und 66 bestehen aus einem transparenten, leitfähigen Material, beispielsweise aus einem der in Bezug auf die Elektrodenschicht 36 nach Fig. 4A beschriebenen Materialien. Die Mikrokapseln 63 besitzen vorzugsweise einen Durchmesser von weniger als 100 µm. Sie sind jeweils mit einer klaren Flüssigkeit gefüllt, in der sich die positiv und negativ geladenen Teilchen 64 und 65 frei bewegen können. Je nach Ladung der Elektroden 61 und 66 erscheint damit die Oberseite der Mikrokapsel weiß und die Unterseite schwarz oder umgekehrt.

Weiter ist es vorteilhaft, die die Beabstandung der Schichten 61 und 66 voneinander bewirkenden Stützstrukturen mittels der Replizierlackschicht 34 zu realisieren, welche dann im Bereich der Stützstrukturen eine Dicke im Bereich des Durchmessers der Mikrokapseln (z.B. 80 µm) besitzt. Vorzugsweise wird ein derartiges Reliefprofil in die Replizierlackschicht 34 mittels UV-Replikation eingebracht.

Anstelle der Verwendung von Mikrokapseln ist es hier auch möglich, durch Mikrostrukturierung der Schicht 62 Mikrosphären unterhalb des Aufnahmevermögens des menschlichen Auges zu schaffen, in denen jeweils die bereits oben beschriebenen positiv und negativ geladenen Teilchen 64 und 65 vorgesehen sind. Hierbei ist es auch möglich, dass diese Teilchen nicht in schwarzer und in weißer Farbe, sondern beispielsweise in zwei Kontrastfarben eingefärbt sind und damit ein wechselnder farbiger Eindruck je nach angelegter Spannung erzeugt wird.

Weiter ist es auch möglich, für das Anzeigenelement 21 ein auf Flüssigkristallen basierendes Anzeigenelement einzusetzen. Vorzugsweise wird hier ein Bi-stabiles reflektives cholisterischen LC-Material verwendet, welches bei Verwendung eines schwarzen Hintergrunds einen Farbwechsel zwischen einem schwarzen und einem farbigen Zustand zeigt. Da derartige Displays keinen Polarisator benötigen, werden als Elektrodenschichten vorzugsweise strukturierte ITO-Schichten verwendet. Um die Dicke der Schicht, beispielsweise 15 µm, zu kontrollieren, wird eine strukturierte Abstandsschicht zwischen den beiden Elektrodenschichten aufgebracht, in der sodann das cholisterische LC-Material eingebracht wird. Das cholisterische Material kann hierbei beispielsweise aus 60% Gewichtsanteil von E7, 10% von CE2 und 20% von CB15 von Merck bestehen, welches sodann mit einem UV-vernetzbaren Monomer, beispielsweise NOA65 von Norland in einem Verhältnis von 85:15 vermischt wird.

Weiter ist es auch möglich, die anhand von Fig. 4b beschriebenen Ausführungsvariationen auf die Ausführungsbeispiele nach Fig. 4c bis Fig. 4d sowie auf die Anordnung eines auf Flüssigkristall basierenden Anzeigenelements in dem Folienkörper 2 anzuwenden.

Weiter ist es auch möglich, die diffraktive Struktur 42 nach Fig. 4a oder Fig. 4b im Bereich der Solarzelle 23 anzuordnen. Zum einen ist es so möglich, das optische Erscheinungsbild des Folienkörpers im Bereich der Solarzelle 23 zum Beispiel durch Überlagerung eines Hologramms zu beeinflussen. Weiter ist es so auch möglich, die Lichtführung zu der Solarzelle 23 sowie die Effizienz der Solarzelle 23 zu beeinflussen.

So ist es beispielsweise möglich, im Bereich der Solarzelle 23 eine Mattstruktur in die Replizierlackschicht 34 nach Fig. 4b abzuformen und so die Effizienz der Solarzelle in diesem Bereich zu verbessern. Diese funktionale Struktur kann hierbei Teil des Designs eines optisch variablen Elements sein, die Mattstruktur kann beispielsweise den Hintergrundbereich eines optisch variablen Elements bilden, das ein filigranes Guillochen-Muster zeigt: Die filigranen Linien der Guilloche belegen lediglich einen kleinen Teil der Fläche der Solarzelle 23 und beeinflussen so kaum die Energieeffizienz der Solarzelle 23. Die Guilloche wird hierbei vorzugsweise mittels eines auf dem Folienkörper 2 vorgesehenen Überdrucks realisiert.

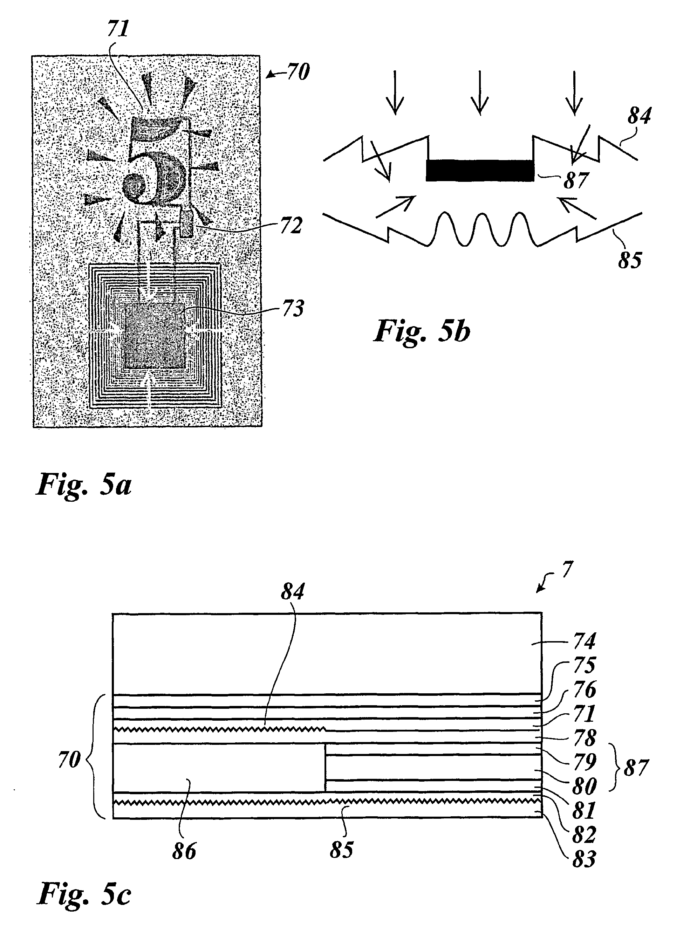

Weiter ergibt sich durch entsprechende Gestaltung der Reliefstruktur 42 die im folgenden anhand der Figuren Fig. 5a bis Fig. 5c beschriebene Möglichkeit, Licht von der die Solarzelle umgebenden Flächenbereichen in Richtung der Solarzelle zu führen.

Fig. 5a zeigt einen Folienkörper 70 mit einem elektrisch gesteuerten Anzeigenelement 71, einer elektronischen Schaltung 72 und einen lichtleitenden Bereich 73 mit einer Solarzelle.

Der Folienkörper 70 bildet die Transferlage einer wie nach den Figuren Fig. 4a und Fig. 4b aufgebauten Transferfolie 7, die aus einer Trägerfolie 74, einer Ablöseschicht 75 und der den Folienkörper 70 bildenden Transferlage besteht. Im Bereich des lichtleitenden Bereichs 73 mit der Solarzelle weist der Folienkörper 70 eine Schutzlackschicht 76, eine Replizierlackschicht 71 mit einer abgeformten Reliefstruktur 84, einer optischen Trennschicht 78, einer zweiten Replizierlackschicht 82 mit einer abgeformten Reliefstruktur 85 und einer zweiten optischen Trennschicht 83 auf. Zwischen den beiden Reliefstrukturen 84 und 85 ist in dem lichtleitenden Bereich eine Abstandsschicht 86 und in dem zentralen Bereich ein - bereits bei Fig. 4a beschriebenes - organisches Solarzellen-Element 87 bestehend aus zwei strukturierten Elektrodenschichten 79 und 81 und einer dazwischen liegenden photoaktiven Schicht 80 vorgesehen.

Bei der photoaktiven Schicht 80 kann es sich hierbei um eine einzige Schicht oder um eine mehrschichtiges Schichtsystem handeln.

Falls die optische Abstandsschicht 86 aus einem Material besteht, welches einen von dem Brechungsindex des Materials der Replizierlackschicht 71 deutlich unterschiedlichen Brechungsindex besitzt, kann die optische Trennschicht 78 auch entfallen. Bei der optischen Trennschicht 83 handelt es sich vorzugsweise um eine reflektierende Schicht, beispielsweise um eine vollflächige opake Metallschicht.

Wie in den Figuren Fig. 5a und Fig. 5b verdeutlicht, wird durch die Reliefstrukturen 84 und 85 das in das Solarzellen-Element 87 umgebende Bereich einfallende Licht durch die spezielle, in Fig. 5b verdeutlichte Gestaltung der Reliefstrukturen 84 und 85 in Richtung des organischen Solarzellen-Elements 87 geleitet, so dass sich die diesem Element zugeführte Strahlungsenergie erhöht. Bei entsprechender Größe der zuführenden Bereiche ist es hier auch möglich, dass das Solarzellen-Element 87 vollständig mit einem Muster bedruckt wird oder vollflächig von einem darüber liegenden reflektierenden optisch variablen Element, beispielsweise einem Kinegram^{®}, überdeckt wird. Weiter ist es auch möglich, die Licht zuführenden Reliefstrukturen 84 und/oder 85 mit Reliefstrukturen zu überlagern, die ein Diffraktionsbild generieren. Die sich so ergebenden Strukturen erbringen so sowohl die Funktion der Lichtzuführung zu dem Solarzellen-Element 87 und generieren auch einen optisch variablen Effekt, der als weiteres Sicherheitsmerkmal für den Betrachter dient.

Es ist auch möglich, auf eine der Reliefstrukturen 84 oder 85 zu verzichten und die Lichtzuführung oder die Erhöhung der Effizienz der Solarzelle mittels nur einer Reliefstruktur zu realisieren. Es ist beispielsweise möglich, nur die Reliefstruktur 85 vorzusehen und diese als Mattstruktur, Blaze oder Kreuzgitter auszuführen.

Weiter ist es möglich, dass die anhand der Figuren Fig. 3 bis Fig. 5c erläuterte Kombination von optisch wirksamen diffraktiven Strukturen und elektrisch-funktionellen Schichten nicht nur als Überlagerung derartiger Schichten realisiert wird, sondern dadurch, dass derartige Schichten nach Art eines Mosaiks nebeneinander angeordnet sind und auf diese Weise eng miteinander verwoben werden.

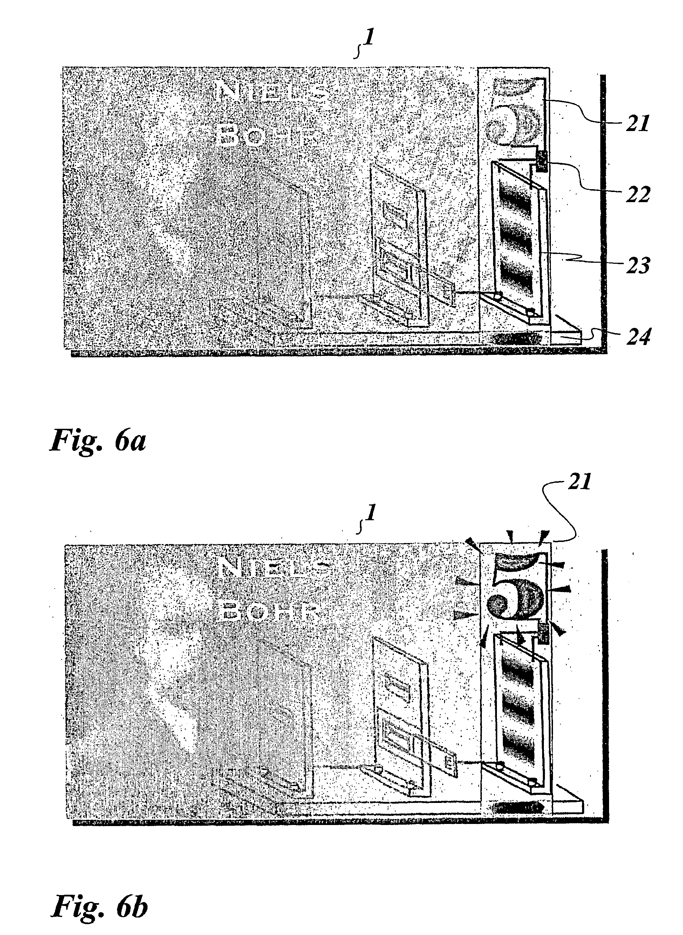

Anhand der Fig. 6a wird nun der sich für den Betrachter ergebende Betrachtungseindruck des Sicherheitsdokuments 1 bei geringer Beleuchtung und anhand der Fig. 6b bei heller Beleuchtung beschrieben:

Fig. 6a zeigt das Sicherheitsdokument 1 mit dem Anzeigenelement 21, der elektronischen Schaltung 22, der bereichsweise überdruckten Solarzelle 23 und dem optisch variablen Element 24. Die Ziffern "1" und "2" sind in grüner Farbe gedruckt. Das in Form der Ziffer "5" ausgeformte und als organische Leuchtdiode implementierte Anzeigenelement 21 leuchtet in blauer Farbe, wenn es nicht aktiviert ist. In den Bereichen 26 ist das optisch variable Element, das im Bereich des Anzeigenelements 21 wie oben beschrieben angeordnet ist, auch bei nicht aktiviertem Zustand der organischen Leuchtdiode sichtbar.

Wird die Solarzelle 23 beleuchtet, so wird die organische Leuchtdiode aktiviert und emittiert rotes Licht, so dass die Ziffer "5" wie in Fig. 6B angedeutet, rot aufleuchtet. Hier ist es auch möglich, dass die elektronische Schaltung 22 die organische Leuchtdiode derart ansteuert, dass die Ziffer "5" aufblinkt. Wie bereits oben beschrieben, ist es jedoch auch möglich, auf die elektronische Schaltung 22 zu verzichten und die Solarzelle 23 direkt mit der organischen Leuchtdiode zu verbinden.

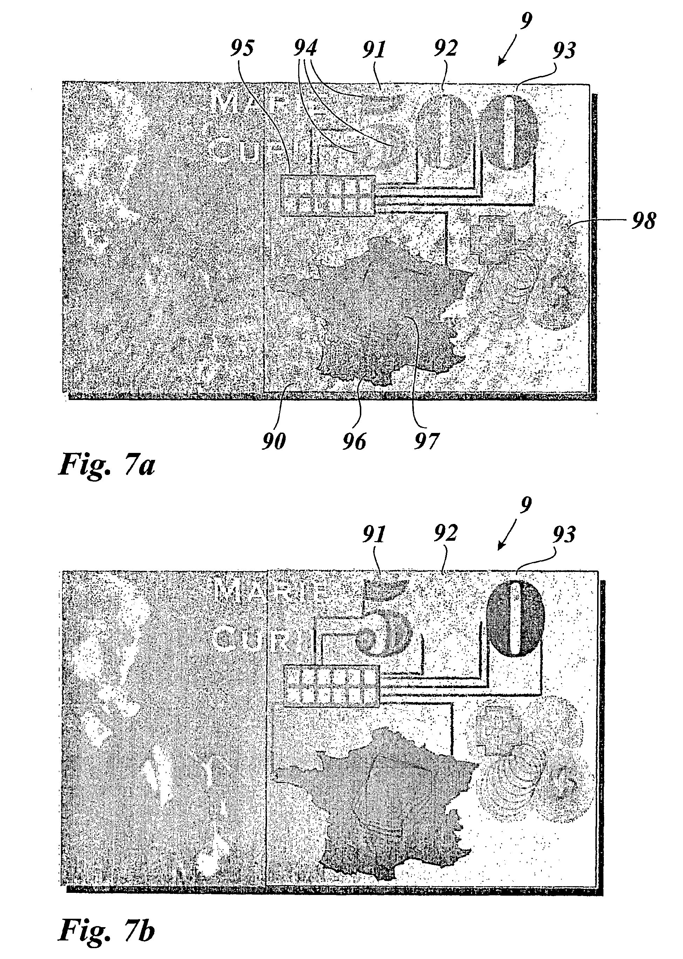

Fig. 7a und Fig. 7b beschreiben das optische Erscheinungsbild eines Sicherheitsdokuments 9, das ebenfalls gemäß der Figuren 3 bis 5c ausgestaltet ist.

Fig. 7a zeigt das Sicherheitsdokument 9, das ein aus drei separat angesteuerten elektrochromen Elementen 91, 92 und 93 aufgebautes Anzeigenelement, eine elektronische Schaltung 95, eine Solarzelle 96 und ein optisch variables Element 98 aufweist. Diese Elemente sind in einem flexiblen Folienkörper 90 integriert, der wie oben beschrieben mittels einer Transferfolie auf den bedruckten Träger des Sicherheitsdokuments 9 aufgebracht ist.

Die Solarzelle ist hier in Form des Landes Frankreich ausgeformt und bildet ein Design-Element des Sicherheitsdokuments 9. Die Solarzelle 96 ist weiter mit einem optisch variablen Element 97, einem Kinegram^{®}, überlagert. Weiter ist ein derartiges Kinegram^{®} in Bereichen 94 des Anzeigenelements 91 angeordnet und überlagert demnach sowohl das Anzeigenelement 91 als auch die Solarzelle 96.

Bei geringer Beleuchtung sind die elektrochromen Elemente 91, 92 und 93 nicht aktiviert und erscheinen alle in derselben, blauen Farbe.

Bei heller Beleuchtung werden die elektrochromen Elemente 91, 92 und 93 aktiviert und erscheinen, wie in Fig. 7b angedeutet, in unterschiedlichen Farben.

Hierbei ist es auch möglich, eines oder mehrere der Elemente 91 bis 93 nicht als elektrochromes Element, sondern als organische Leuchtdiode auszugestalten, so dass beispielsweise die Ziffer "5" bei heller Beleuchtung rot blinkt.

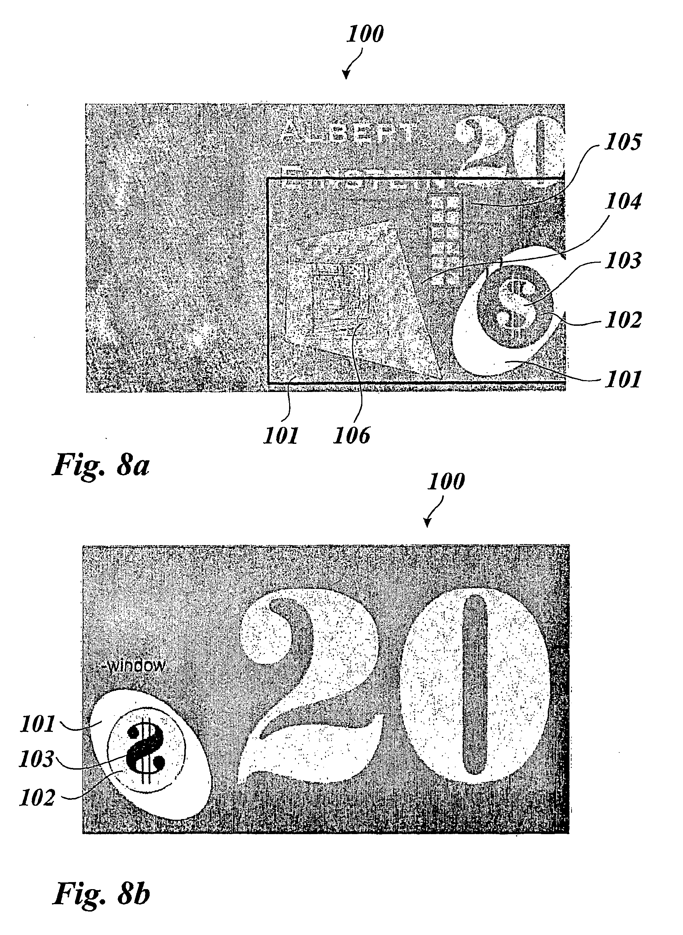

Fig. 8a und Fig. 8b verdeutlichen das optische Erscheinungsbild eines Sicherheitsdokuments 100, wobei Fig. 8a einen Ausschnitt der Vorderseite des Sicherheitsdokuments 100 und Fig. 8b einen Ausschnitt der Rückseite des Sicherheitsdokuments 100 zeigt.

Auf dem Träger des Sicherheitsdokuments 100 ist, wie in Fig. 8a gezeigt, ein mehrschichtiger flexibler Folienkörper 101 aufgebracht, welcher eine Solarzelle 104, eine elektronische Schaltung 105 und ein im Bereich eines ovalförmig aus dem Träger des Sicherheitsdokuments 100 ausgestanzten transparenten Fensters 101 angeordnetes Anzeigenelement aufweist. Das Anzeigenelement ist hierbei gemäß Fig. 4d ausgestaltet, wobei die Elektrodenschichten 61 und 66 jeweils aus zwei Elektrodenpaaren bestehen. Das eine Elektrodenpaar ist in Form des Zeichens "$" ausgeformt und in dem ein Bereich 103 vorgesehen, und das andere Elektrodenpaar ist in Form des umgebenden Bereichs 102 ausgeformt.

Die Solarzelle 104 ist auch hier mit einem optisch variablen Element 106, vorzugsweise einem Kinegram^{®}, überlagert.

Wird das Sicherheitsdokument 100 nun beleuchtet, so werden die Elektrodenpaare des Anzeigenelements mit einer gegenseitig polarisierten Spannung belegt, so dass sich auf der Vorderseite der in Fig. 8a gezeigte Betrachtungseindruck ergibt und auf der Rückseite der in Fig. 8b gezeigte Betrachtungseindruck ergibt. Die elektronische Schaltung 105 wechselt in regelmäßigen Perioden die Polarität der beiden Elektrodenpaare, so dass das Zeichen "$" wechselseitig in weiß vor dunklem Hintergrund oder in dunkel vor weißem Hintergrund erscheint.

## Patentansprüche

1. Sicherheitsdokument, insbesondere Banknote oder Ausweis, mit einem Träger (10) und einem auf dem Träger aufgebrachten mehrschichtigen flexiblen Folienkörper (2, 70, 90, 101), der ein oder mehrere optische Sicherheitsmerkmale bereitstellt,
**dadurch gekennzeichnet,**
**dass** der mehrschichtige Folienkörper (2, 70, 90, 101) ein elektrisch gesteuertes Anzeigenelement (21, 71, 91, 92, 93, 102, 103) zur Generierung eines optischen Sicherheitsmerkmals mit zugeordneter elektrischer Stromquelle (23, 73, 96, 104) zum Betrieb des Anzeigenelements in Kombination mit einer optisch wirksamen diffraktiven Struktur (24, 42, 84, 85, 96. 98, 106) aufweist, wobei das Anzeigenelement ein elektrochromes Element (91, 92, 93) aufweist, das in Form eines Musters oder einer Zahl ausgeformt ist, oder das Anzeigenelement eine Vielzahl von unterschiedlich gefärbten und unterschiedlich geladenen Teilchen (64, 65) aufweist, die zwischen zwei Elektrodenschichten (61, 66) angeordnet sind.

2. Sicherheitsdokument nach Anspruch 1,
**dadurch gekennzeichnet,**
**dass** die diffraktive Struktur (42) und/oder eine Mikrostruktur zumindest bereichsweise in Überdeckung mit dem elektrisch gesteuerten Anzeigenelement (21, 91) angeordnet ist und das optische Erscheinungsbild des durch die diffraktive Struktur und/oder die Mikrostruktur erzeugten optischen Effekts durch das elektrisch gesteuerte Anzeigenelement gesteuert ist.

3. Sicherheitsdokument nach Anspruch 1 oder Anspruch 2,
**dadurch gekennzeichnet,**
**dass** das elektrisch gesteuerte Anzeigenelement ein Licht emittierendes Anzeigenelement ist und dass die diffraktive Struktur das Abstrahlverhalten des Anzeigenelements verändert.

4. Sicherheitsdokument nach einem der vorgehenden Ansprüche,
**dadurch gekennzeichnet,**
**dass** die diffraktive Struktur (84, 97, 106) zumindest bereichsweise in Überdeckung mit der elektrischen Stromquelle (73, 96, 104) angeordnet ist.

5. Sicherheitsdokument nach einem der vorgehenden Ansprüche,
**dadurch gekennzeichnet,**
**dass** die elektrische Stromquelle (23, 73, 96, 104) eine Solarzelle ist.

6. Sicherheitsdokument nach Anspruch 5,
**dadurch gekennzeichnet,**
**dass** die diffraktive Struktur (84, 85) und/oder eine Mikrostruktur Licht aus einem die Solarzelle (87) umgebenden Flächenbereich zur Solarzelle führt oder den Wirkungsgrad der Solarzelle erhöht.

7. Sicherheitsdokument nach Anspruch 6,
**dadurch gekennzeichnet,**
**dass** die Licht zur Solarzelle führende dififraktive Struktur weiter ein optisch erkennbares Sicherheitsmerkmal bereitstellt.

8. Sicherheitsdokument nach einem der Ansprüche 5 bis 7,
**dadurch gekennzeichnet,**
**dass** die Solarzelle (96) in Form eines Muster oder Bildes ausgeformt und passgenau zu einem umgebenden Druckdesign des Trägers ausgerichtet ist.

9. Sicherheitsdokument nach einem der Ansprüche 5 bis 8,
**dadurch gekennzeichnet,**
**dass** die Solarzelle (23) partiell musterförmig überdruckt ist.

10. Sicherheitsdokument nach Anspruch 1,
**dadurch gekennzeichnet,**
**dass** die diffraktive Struktur benachbart zum Anzeigenelement angeordnet ist.

11. Sicherheitsdokument nach einem der vorgehenden Ansprüche,
**dadurch gekennzeichnet,**
**dass** der flexible mehrschichtige Folienkörper und ein benachbarter Bereich des Sicherheitsdokuments mit einem gemeinsam, weitgehend opaken und musterförmig gestalteten Überdruck versehen sind.

12. Sicherheitsdokument nach Anspruch 11,
**dadurch gekennzeichnet**
**dass** der musterförmig gestaltete Überdruck eine individualisierte Information enthält.

13. Sicherheitsdokument nach einem der vorhergehenden Ansprüche,
**dadurch gekennzeichnet,**
**dass** das Anzeigenelemente partiell musterförmig überdruckt ist, wobei der Überdruck vorzugsweise eine individualisierte Information enthält.

14. Sicherheitsdokument nach einem der vorhergehenden Ansprüche,
**dadurch gekennzeichnet**
**dass** das Anzeigenelement mittels Laserablation mit einer individualisierten Information versehen ist.

15. Sicherheitsdokument nach einem der vorgehenden Ansprüche,
**dadurch gekennzeichnet,**
**dass** das Anzeigenelement (21,71) eine organische Leuchtdiode aufweiset, die in Form eines Musters oder einer Zahl ausgeformt ist.

16. Sicherheitsdokument nach einem der vorgehenden Ansprüche,
**dadurch gekennzeichnet,**
**dass** das Sicherheitsdokument ein transparentes Fenster (101) aufweist und das Anzeigenelement (102, 103) in dem transparenten Fenster angeordnet ist.

17. Sicherheitsdokument nach einem der vorgehenden Ansprüche,
**dadurch gekennzeichnet,**
**dass** die diffraktive Struktur zumindest bereichsweise über einem aus organischen Halbleiterbauelementen aufgebauten elektronischen Schaltkreis angeordnet ist, der das Anzeigenelement steuert,

18. Sicherheitsdokument nach einem der vorhergehenden Ansprüche,
**dadurch gekennzeichnet**
**dass** der mehrschichtige Folienkörper eine Batterie oder eine Kapazität; zur Energiespeicherung aufweist.

19. Sicherheitsdokument nach einem der vorgehenden Ansprüche,
**dadurch gekennzeichnet,**
**dass** der flexible mehrschichtige Folienkörper (2, 4, 5, 6. 7) eine Replizierlackschicht mit einer abgeformten, beugungsoptischen Reliefstruktur (42) zur Erzeugung eines beugungsoptischen Sicherheitsmerkmals und zwei oder mehr elektrische Funktionsschichten eines elektrisch gesteuerten Anzeigenelements aufweist.

20. Sicherheitsdokument nach Anspruch 16,
**dadurch gekennzeichnet,**
**dass** der mehrschichtige Folienkörpers mindestens eine elektrische Funktionsschicht aus einem organischen Halbleitermaterial aufweist.

21. Sicherheitsdokument nach einem der vorgehenden Ansprüche,
**dadurch gekennzeichnet,**
**dass** der Träger (10) aus einem Papiermaterial besteht.

22. Sicherheitsdokument nach einem der vorgehenden Ansprüche,
**dadurch gekennzeichnet,**
**dass** der mehrschichtige Folienkörper (2, 30, 60, 70) als Transforiege einer Transferfolie (3, 4, 5,6,7) auf den Träger aufgebracht ist.

23. Transferfolie (3, 4, 5, 6, 7) zum Aufbringen eines mehrschichtigen flexiblen Folienkörper (2, 30, 60, 70), der ein oder mehrere optische Sicherheitsmerkmale bereitstellt, auf einen Träger (10) eines Sicherheitsdokument, insbesondere einer Banknote oder eines Ausweises, wobei die Transferfolie (3, 4, 5, 6, 7) eine Trägerfolie (31, 74) und eine den mehrschichtigen Folienkörper (2, 30, 60, 70) bildende Transferlage aufweist,
**dadurch gekennzeichnet,**
**dass** der mehrschichtige Folienkörper (2, 30, 60, 70) ein elektrisch gesteuertes Anzeigenelement (21, 71, 91. 92, 93, 102, 103) zur Generierung eines optischen Sicherheitsmerkmals mit zugeordneter elektrischer Stromquelle (23, 73, 96, 104) zum Betrieb des Anzeigenelements in Kombination mit einer optisch wirksamen diffraktiven Struktur (24, 42, 84, 85, 96, 98, 106) aufweist, wobei das Anzeigenelement ein elektrochromes Element (91, 92, 93) aufweist, das in Form eines Musters oder einer Zahl ausgeformt ist, oder das Anzeigenelement eine Vielzahl von unterschiedlich gefärbten und unterschiedlich geladenen Teilchen (64, 65) aufweist, die zwischen zwei Elektrodenschichten (61, 66) angeordnet sind.

## Claims

1. Security document, in particular banknote or identity card, comprising a carrier (10) and a multilayer flexible film body (2, 70, 90, 101) applied on the carrier and having one or a plurality of optical security features,
**characterized**
**in that** the multilayer film body (2, 70, 90, 101) has an electrically controlled display element (21, 71, 91, 92, 93, 102, 103) for generating an optical security feature with an assigned electrical power source (23, 73, 96, 104) for operating the display element in combination with an optically effective diffractive structure (24, 42, 84, 85, 96, 98, 106), wherein the display element has an electrochromic element (91, 92, 93) shaped in the form of a pattern or a number, or the display element has a multiplicity of differently coloured and differently charged particles (64, 65) arranged between two electrode layers (61, 66).

2. Security document according to Claim 1,
**characterized**
**in that** the diffractive structure (42) and/or a microstructure is arranged in a manner overlapping the electrically controlled display element (21, 91) at least in regions and the optical appearance of the optical effect generated by the diffractive structure and/or the microstructure is controlled by the electrically controlled display element.

3. Security document according to Claim 1 or Claim 2,
**characterized**
**in that** the electrically controlled display element is a light emitting display element, and in that the diffractive structure alters the emission behavior of the display element.

4. Security document according to one of the preceding claims,
**characterized**
**in that** the diffractive structure (84, 97, 106) is arranged in a manner overlapping the electrical power source (73, 96, 104) at least in regions.

5. Security document according to one of the preceding claims,
**characterized**
**in that** the electrical power source (23, 73, 96, 104) is a solar cell.

6. Security document according to Claim 5,
**characterized**
**in that** the diffractive structure (84, 85) and/or a microstructure guides light from an area region surrounding the solar cell (87) to the solar cell or increases the efficiency of the solar cell.

7. Security document according to Claim 6,
**characterized**
**in that** the diffractive structure that guides light to the solar cell furthermore provides an optically recognizable security feature.

8. Security document according to one of Claims 5 to 7,
**characterized**
**in that** the solar cell (96) is shaped in the form of a pattern or image and is aligned with accurate register with respect to a surrounding print design of the carrier.

9. Security document according to one of Claims 5 to 8,
**characterized**
**in that** the solar cell (23) is overprinted partially in patterned fashion.

10. Security document according to Claim 1,
**characterized**
**in that** the diffractive structure is arranged adjacent to the display element.

11. Security document according to one of the preceding claims,
**characterized**
**in that** the flexible multilayer film body and an adjacent region of the security document are provided with a jointly largely opaque overprint configured in patterned fashion.

12. Security document according to Claim 11,
**characterized**
**in that** the overprint configured in patterned fashion contains an individualized information item.

13. Security document according to one of the preceding claims,
**characterized**
**in that** the display element is overprinted partially in patterned fashion, the overprint preferably containing an individualized information item.

14. Security document according to one of the preceding claims,
**characterized**
**in that** the display element is provided with an individualized information item by means of laser ablation.

15. Security document according to one of the preceding claims,
**characterized**
**in that** the display element (21, 71) has an organic light emitting diode shaped in the form of a pattern or a number.

16. Security document according to one of the preceding claims,
**characterized**
**in that** the security document has a transparent window (101) and the display element (102, 103) is arranged in the transparent window.

17. Security document according to one of the preceding claims,
**characterized**
**in that** the diffractive structure is arranged, at least in regions, above an electronic circuit which is constructed from organic semiconductor components and which controls the display element.

18. Security document according to one of the preceding claims,
**characterized**
**in that** the multilayer film body has a battery or a capacitance for storing energy.

19. Security document according to one of the preceding claims,
**characterized**
**in that** the flexible multilayer film body (2, 4, 5, 6, 7) has a replication lacquer layer having an impressed diffraction-optical relief structure (42) for generating a diffraction-optical security feature and two or more electrical functional layers of an electrically controlled display element.

20. Security document according to Claim 16,
**characterized**
**in that** the multilayer film body has at least one electrical functional layer composed of an organic semiconductor material.

21. Security document according to one of the preceding claims,
**characterized**
**in that** the carrier (10) comprises a paper material.

22. Security document according to one of the preceding claims,
**characterized**
**in that** the multilayer film body (2, 30, 60, 70) is applied to the carrier as a transfer layer of a transfer film (3, 4, 5, 6, 7).

23. Transfer film (3, 4, 5, 6, 7) for applying a multilayer flexible film body (2, 30, 60, 70), which provides one or a plurality of optical security features, to a carrier (10) of a security document, in particular a banknote or an identity card, the transfer film (3, 4, 5, 6, 7) having a carrier film (31, 74) and a transfer layer forming the multilayer film body (2, 30, 60, 70),
**characterized**
**in that** the multilayer film body (2, 30, 60, 70) has an electrically controlled display element (21, 71, 91, 92, 93, 102, 103) for generating an optical security feature with an assigned electrical power source (23, 73, 96, 104) for operating the display element in combination with an optically effective diffractive structure (24, 42, 84, 85, 96, 98, 106), wherein the display element has an electrochromic element (91, 92, 93) shaped in the form of a pattern or a number, or the display element has a multiplicity of differently coloured and differently charged particles (64, 65) arranged between two electrode layers (61, 66).

## Revendications

1. Document de sécurité, en particulier un billet de banque ou un passeport, avec un support (10) et un corps de film flexible multicouches (2, 70, 90, 101) appliqué sur le support, qui délivre un ou plusieurs caractères de sécurité
**caractérisé en ce que**
le corps de film multicouches flexible (2, 70, 90, 101) présente un élément de visualisation (21, 71, 91, 92, 93, 102, 103) à commande électrique servant à générer un caractère de sécurité optique avec une source de courant électrique (23, 73, 96, 104) afférente servant à faire fonctionner l'élément de visualisation en combinaison avec une structure diffractée à effet optique (24, 42, 84, 85, 96, 98, 106), sachant que l'élément de visualisation présente un élément électrochrome (91, 92, 93), qui est démoulé en forme de motif ou de chiffre ou bien l'élément de visualisation présente un grand nombre de petites pièces (64, 65) colorées et différemment chargées qui sont disposées entre deux couches d'électrodes (61, 66).

2. Document de sécurité selon la revendication 1
**caractérisé en ce que**
la structure diffractée (42)et/ou une microstructure est superposée, du moins en partie, à l'élément de visualisation (21, 91) à commande électrique et l'apparence optique de l'effet d'optique généré par la structure diffractée et/ou la microstructure est commandée par l'élément de visualisation à commande électrique.

3. Document de sécurité selon la revendication 1 ou la revendication 2
**caractérisé en ce que**
l'élément de visualisation à commande électrique est un élément de visualisation produisant de la lumière et **en ce que** la structure diffractée modifie la diffusion de l'élément de visualisation.

4. Document de sécurité selon la revendication 1 ou la revendication 2
**caractérisé en ce que**
la structure diffractée (84, 97, 106) est superposée, du moins en partie, à la source de courant électrique (73, 96, 104).

5. Document de sécurité selon l'une des revendications précédentes
**caractérisé en ce que**
la source de courant électrique (23, 73, 96, 104) est une cellule solaire.

6. Document de sécurité selon la revendication 5
**caractérisé en ce que**
la structure diffractée (84, 85) et/ou une microstructure conduit de la lumière provenant d'une partie de surface entourant la cellule solaire (87) vers la cellule solaire ou augmente le degré d'efficacité de la cellule solaire.

7. Document de sécurité selon la revendication 6
**caractérisé en ce que**
la structure diffractée conduisant la lumière à la cellule solaire délivre aussi un caractère de sécurité optiquement reconnaissable.

8. Document de sécurité selon l'une des revendications 5 à 7
**caractérisé en ce que**
la cellule solaire (96) est démoulée sous la forme d'un motif ou d'une image et est parfaitement ajustée au design alentours imprimé du support.

9. Document de sécurité selon la revendication 1,
**caractérisé en ce que**
la cellule solaire (23) est partiellement superposée à la forme du motif

10. Document de sécurité selon la revendication 1,
**caractérisé en ce que**
la structure diffractée est contigüe à l'élément de visualisation.

11. Document de sécurité selon l'une des revendications précédentes
**caractérisé en ce que**
le corps de film multicouches flexible et une zone contigüe du document de sécurité sont pourvus d'une surimpression commune en grande partie opaque et conçue selon la forme du motif.

12. Document de sécurité selon la revendication 11,
**caractérisé en ce que**
la surimpression conçue selon la forme du motif contient une information individualisée.

13. Document de sécurité selon l'une des revendications précédentes
**caractérisé en ce que**
l'élément de visualisation est partiellement surimprimée selon la forme du motif, sachant que la surimpression contient de préférence une information individualisée.

14. Document de sécurité selon l'une des revendications précédentes
**caractérisé en ce que**
l'élément de visualisation est pourvu d'une information individualisée à l'aide d'une ablation au laser

15. Document de sécurité selon l'une des revendications précédentes
**caractérisé en ce que**
l'élément de visualisation (21, 71) présente une diode lumineuse organique qui est démoulée en forme de motif ou de chiffre.

16. Document de sécurité selon l'une des revendications précédentes
**caractérisé en ce que**
Le document de sécurité présente une fenêtre transparente (101) et **en ce que** l'élément de visualisation est (102, 103) est placé dans la fenêtre transparente.

17. Document de sécurité selon l'une des revendications précédentes
**caractérisé en ce que**
la structure diffractée est placée au-dessus d'un circuit de commutation électronique constitué d'éléments semi-conducteurs organiques, lequel commande l'élément de visualisation.

18. Document de sécurité selon l'une des revendications précédentes
**caractérisé en ce que**
le corps de film multicouches présente une batterie ou une capacité de réserve d'énergie.

19. Document de sécurité selon l'une des revendications précédentes
**caractérisé en ce que**
le corps de film multicouches flexible (2, 4, 5, 6, 7) présente une couche de laque de réplique avec une structure à relief (42) démoulée, à effet optique de diffraction servant à générer un caractère de sécurité à effet optique de diffraction et deux couches de fonction électrique ou plus d'un élément de visualisation à commande électrique.

20. Document de sécurité selon l'une des revendications précédentes
**caractérisé en ce que**
Le corps de film multicouches présente au moins une couche de fonction électrique en matériau semi-conducteur organique.

21. Document de sécurité selon l'une des revendications précédentes
**caractérisé en ce que**
Le support (10) est en matériau en papier

22. Document de sécurité selon l'une des revendications précédentes
**caractérisé en ce que**
Le corps de film multicouches (2, 30, 60, 70) est appliqué comme couche de transfert d'un film de transfert (3, 4, 5, 6, 7) sur le support.

23. Film de transfert (3, 4, 5, 6, 7) servant à appliquer un corps de film multicouches flexible (2, 30, 60, 70) qui délivre un ou plusieurs caractères de sécurité optiques sur un support (10) d'un document de sécurité, en particulier un billet de banque ou un passeport, sachant que le film de transfert (3, 4, 5, 6, 7) présente un film porteur (31, 74) et une couche de transfert formant le corps de film multicouches (2, 30, 60,70)
**caractérisé en ce que**
le corps de film multicouches (2, 30, 60, 70) présente un élément de visualisation à commande électrique (21, 71, 91, 92, 93, 102, 103) servant à générer un caractère de sécurité optique avec une source de courant électrique (23, 73, 96, 104) afférente servant à faire fonctionner l'élément de visualisation en combinaison avec une structure diffractée (24, 42, 84, 85, 96, 98, 106) à effet optique de diffraction, sachant que l'élément de visualisation présente un élément électrochrome (91, 92, 93) qui est démoulé en forme de motif ou de chiffre, ou que l'élément de visualisation présente un grand nombre de petites pièces (64, 65) à la coloration différente et au chargement différent, lesquelles sont placées entre deux couches d'électrodes (61, 66).
